# EUROPEAN PATENT APPLICATION

(11) **EP 2 548 899 A1**
(43) Date of publication of application: **23.01.2013**
(21) Application number: 10847992.4
(22) Date of filing: 06.12.2010
(51) Int. Cl.: C08F 8/12, C08F 6/10

(54) **PRODUCTION METHOD AND PRODUCTION DEVICE FOR POLYVINYL ALCOHOL**

(30) Priority: 18.03.2010 JP 2010061808
(71) Applicant: Denki Kagaku Kogyo Kabushiki Kaisha, Tokyo 103-8338 (JP)
(72) Inventor: KOZUKA Takahiro, Itoigawa-city Niigata 949-0393 (JP)
(74) Representative: Murray, Adrian D'Coligny
(86) International application number: PCT/JP2010/071793
(87) International publication number: WO 2011/114586

(57) **Abstract**

Provided are a method and an apparatus for producing a polyvinyl alcohol that can remove unreacted monomers from the polymerization solution efficiently and reduce the amount of methanol injected.

A polymerization solution obtained by polymerization of one or more vinyl esters or copolymerization of a vinyl ester with other monomers copolymerizable therewith is adjusted to a particular concentration by addition of liquid methanol and then brought into contact with methanol vapor in counter-current flow for separation into a monomer-free polymer solution and a monomer/methanol mixture. The monomer-free polymer solution is then saponified in the presence of a catalyst to give a polyvinyl alcohol.

## Description

### Technical Field

The present invention relates to a method and an apparatus for producing a polyvinyl alcohol. More specifically, it relates to a technique of removing unreacted monomers remaining in the paste obtained from polymerization step.

### Background Art

Polyvinyl alcohol (PVA), a water-soluble synthetic resin, has been used mainly as a raw material for synthetic fibers. Recently, it is used in various fields, for example for production of film materials, emulsifying dispersants, adhesives and binder resins, because of its favorable properties. The PVA resins are generally produced by polymerization of a vinyl ester and saponification of the resulting polyvinyl ester in an organic solvent in the presence of a catalyst.

Normally in methods of producing a PVA resin, a monomer-removing step of removing unreacted monomers from the polymerization solution is carried out between polymerization and saponification steps. Examples of the method include feeding the polymerization solution obtained in polymerization step into a monomer-removing column having perforated plates in multiple stages, and bringing methanol into contact with the polymerization solution, as methanol vapor is injected into the column from the column bottom (see Patent Documents 1 to 3, for example).

### Citation List

### Patent Documents

[Patent Document 1] Japanese Examined Patent Application Publication No. 32-3589
[Patent Document 2] Japanese Unexamined Patent Application Publication No. 2002-293823
[Patent Document 3] Japanese Unexamined Patent Application Publication No. 2007-245432

### Summary of Invention

### Technical Problem

However, the conventional methods for producing a PVA resin described in Patent Documents 1 to 3 had a problem of low monomer-removing efficiency. Although part of a distillate at the top of a column is refluxed for improvement of thermal efficiency in traditional production methods, as described in Patent Document 1, there is currently a need for further improvement in its efficiency and also for reduction of energy consumption.

Thus, the major objects of the present invention are to provide a method and an apparatus for producing a polyvinyl alcohol that can remove unreacted monomers efficiently from the polymerization solution with energy smaller than that by traditional methods.

### Solution to Problem

The method for producing a polyvinyl alcohol resin according to the present invention includes at least a polymerization step of polymerizing one or more vinyl esters or copolymerizing a vinyl ester with other monomers copolymerizable therewith, a monomer-removing step of bringing the polymerization solution obtained in the polymerization step into contact with methanol vapor for removal of unreacted monomers, and a saponification step of saponifying the unreacted monomer-free polymer solution in an organic solvent in the presence of an alkali catalyst, and the concentration of the polymer solution is adjusted by addition of liquid methanol before contact with methanol vapor in the monomer-removing step.
In the present invention, because liquid methanol is added to the polymerization solution, it is possible to reduce the amount of the methanol vapor injected.
This production method may include additionally a step of concentrating the monomer/methanol mixture generated by contact between the polymerization solution and methanol vapor to its azeotropic composition.
It is also possible to recover the monomers from the solution after concentration above.

The apparatus for producing a polyvinyl alcohol resin according to the present invention includes a column main body, a methanol-introducing pipe for supply of methanol to the polymerization solution, a polymerization solution-introducing mechanism having the methanol-introducing pipe, for supply of the polymerization solution into the top region of the column main body and a methanol vapor-introducing mechanism for supply of methanol vapor into the bottom region of the column main body, and the methanol-diluted polymerization solution is introduced into the column main body.
In the present invention, because the polymerization solution introduced into the column main body is diluted with liquid methanol, it is possible to use the monomer-free solution, as it is, in the saponification reaction even when the amount of the methanol vapor injected is reduced.
In the column main body of this production apparatus, the polymerization solution and the methanol vapor are brought into contact with each other in counter-current flow.
In addition, the apparatus may have additionally a concentration unit for concentrating a distillate discharged from the top of the column main body to its azeotropic composition.

### Advantageous Effect of Invention

Because liquid methanol is added to the polymerization solution, it is possible according to the present invention to remove unreacted monomers efficiently from the polymerization solution with energy smaller than that by traditional methods.

### Brief Description of Drawings

Fig. 1 is a schematic view illustrating the configuration of an apparatus for producing a PVA resin in a second embodiment of the present invention.
Fig. 2 is a schematic view illustrating the configuration of an apparatus for producing a PVA resin in a third embodiment of the present invention.
Fig. 3 is a schematic view illustrating the configuration of an apparatus for producing a PVA resin in a Comparative Example of the present invention.

### Description of Embodiments

Hereinafter, favorable embodiment of the invention will be described in detail with reference to attached drawings. However, it should be understood that the present invention is not restricted by the embodiments below.

### (First embodiment)

The method for producing a polyvinyl alcohol (PVA) resin in a first embodiment of the present invention will be described first. In the PVA production method of the present embodiment, the concentration of a polymerization solution is adjusted by addition of liquid methanol before contact thereof with methanol vapor in a monomer-removing step of removing unreacted monomers from the polymerization solution (paste) obtained after a polymerization step.

### [Polymerization step]

In the method of producing a polyvinyl alcohol resin in the present embodiment, a polyvinyl ester is prepared by polymerization of one or more vinyl esters or by copolymerization of a vinyl ester with other monomers copolymerizable therewith. The vinyl esters for use include, for example, vinyl formate, vinyl acetate, vinyl propionate, vinyl valerate, vinyl caproate, vinyl laurate, vinyl stearate, vinyl benzoate, vinyl pivalate and vinyl versatate, but vinyl acetate is preferable from the viewpoint of polymerization stability.

Other monomers copolymerizable with these vinyl esters include, but are not particularly limited to, for example, α-olefins such as ethylene and propylene; alkyl (meth)acrylate esters such as methyl (meth)acrylate, ethyl (meth)acrylate, butyl (meth)acrylate and 2-ethylhexyl (meth)acrylate; unsaturated amides such as (meth)acrylamide and N-methylol acrylamide; unsaturated acids such as (meth)acrylic acid, crotonic acid, maleic acid, itaconic acid and fumaric acid; unsaturated acid alkyl (such as methyl, ethyl and propyl) esters; unsaturated acid anhydrides such as maleic anhydride; unsaturated acid salts (such as sodium salts, potassium salts, ammonium salts, and the like); glycidyl group-containing monomers such as allyl glycidylether and glycidyl (meth)acrylate; sulfonic acid group-containing monomer such as 2-acrylamido-2-methylpropanesulfonic acid and the salts thereof; phosphate group-containing monomers such as acid phosphoxyethyl methacrylate and acid phosphoxypropyl methacrylate; alkyl vinylethers and the like.

### [Monomer-removing step]

Then, the monomer-removing step of removing unreacted monomers (vinyl ester and other monomers) from the polymerization solution (paste) obtained after the polymerization step is carried out. Specifically, for example, the polymerization solution and the methanol vapor are brought into contact with each other in counter-current flow in a distillation column for separation of a mixture of unreacted monomers and methanol from the polymerization solution. It is thus possible to obtain a polymer solution mostly free of unreacted monomers.

In addition, in the PVA resin production method of the present embodiment, the concentration of the polymerization solution is adjusted by addition of liquid methanol before contact thereof with methanol vapor. In traditional production methods, part of the monomer/methanol mixture separated is added as reflux liquid to the polymerization solution before contact with methanol vapor and the concentration of the polymerization solution is regulated by adjusting the addition amount. In this case, the circulation amount of unreacted monomers increases, demanding a greater amount of methanol vapor.

In contrast in the production method in the present embodiment, liquid methanol is added to the polymerization solution, in addition to the reflux liquid, for control of the concentration of the polymerization solution and thus, it is possible to reduce the amount of the reflux liquid added, compared to conventional methods. It leads to reduction in the amount of the unreacted monomers circulated and also in the amount of the methanol vapor injected, thus allowing reduction of energy consumption.

Also in the production method of the present embodiment, the reflux liquid is added to the polymerization solution to increase the monomer concentration in the polymerization solution and to make the separated solution have a composition close to its azeotropic composition.

The concentration of the polymerization solution after addition of the liquid methanol is desirably 10 to 70 mass %. When the concentration of the polymerization solution before contact with methanol vapor is less than 10 mass %, a large amount of methanol vapor is needed, leading to increase of energy consumption, while when it is more than 70 mass %, the polymerization solution becomes less flowable, possibly leading to blockage in the column. Alternatively, the viscosity of the polymerization solution is desirably 0.001 to 2.0 Pa • s. It is thus possible to remove monomers at high efficiency.

### [Saponification step]

The monomer-removed polymer (polyvinyl ester) solution is then saponified in an organic solvent in the presence of a catalyst. Alcohols such as methanol, ethanol, propanol, ethylene glycol, propylene glycol, glycerol and diethylene glycol can be used as the organic solvents for use, but methanol is particularly preferable.

Examples of the saponification catalysts include alkali catalysts such as sodium hydroxide, potassium hydroxide, sodium alcoholate and sodium carbonate and acid catalysts such as sulfuric acid, phosphoric acid and hydrochloric acid. Among the saponification catalysts above, use of an alkali catalyst is preferable and use of sodium hydroxide is more preferable. It is thus possible to raise saponification rate and improve productivity.

In the saponification step, part or all of the vinyl ester groups in the polyvinyl ester are saponificated to vinyl alcohol groups. The saponification degree of the PVA resin obtained in the saponification step is not particularly limited and may be determined arbitrarily, for example, in accordance with its application.

Also in the method for producing a PVA resin according to the present embodiment, a washing step for removal of impurities such as sodium acetate and a drying step may be carried out, as needed, after the polymerization and saponification steps above.

As described above in detail, in the method for producing a PVA resin according to the present embodiment, there is no need for excessive addition of the reflux liquid for adjustment of the concentration in the saponification step for saponifying the monomer-free polymer solution, as in conventional methods, because the concentration of the polymerization solution is regulated by addition of liquid methanol. It is thus possible to reduce the amount of the methanol vapor injected and to remove unreacted monomers from the polymerization solution efficiently by using methanol vapor in an amount smaller than that by conventional methods.

Further in the method for producing a PVA resin according to the present embodiment, it is possible to make the composition of the separated solution closer to the azeotropic composition of the monomers and methanol easily by adjusting the amount of the reflux liquid added to the polymerization solution.

### (Second embodiment)

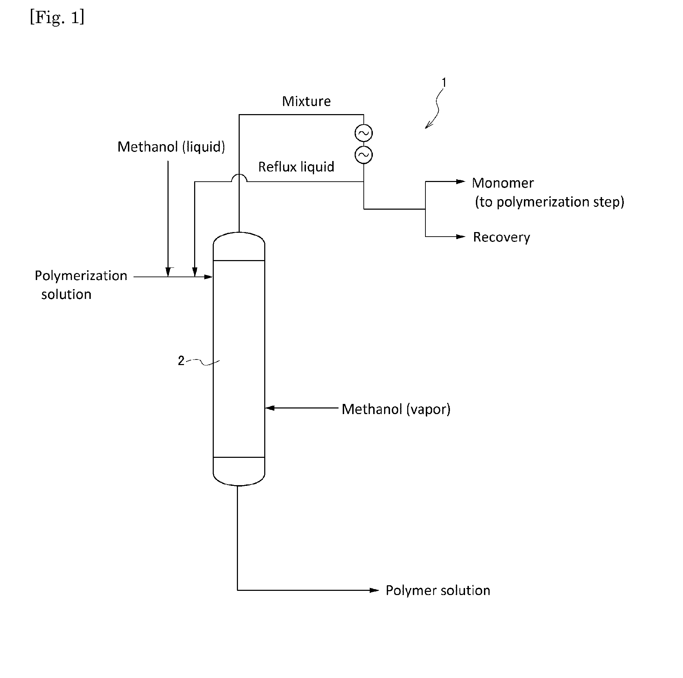

Hereinafter, the apparatus for producing a PVA resin in a second embodiment of the present invention will be described. Fig. 1 is a schematic view illustrating the configuration of an apparatus for producing a PVA resin in the present embodiment. The apparatus 1 for producing a PVA resin in the present embodiment is an apparatus permitting use of the method for producing a PVA resin in the first embodiment described above and has an approximately tube-shaped column main body 2, as shown in Fig. 1.

The column main body 2 has a polymerization solution inlet for introducing the polymerization solution in the top region thereof and a methanol inlet for introducing methanol vapor in the bottom region thereof. The column main body 2 also has, for example, perforated plates placed in multiple stages for contact between the polymerization solution and methanol vapor in counter-current flow.

In addition, the column 2 has a degassing port installed for withdrawal of the monomer/methanol gas mixture in the top region and an outlet port for discharge of the monomer-free polymer solution in the bottom region.

On the other hand, a pipe for supply of the polymerization solution is connected to the polymerization solution inlet of column main body 2, and an injection pipe for supply of the reflux liquid and an injection pipe for injection of liquid methanol for concentration adjustment are connected to the pipe. Thus in the apparatus 1 for producing a PVA resin, the polymerization solution discharged from a polymerization tank is adjusted to a particular concentration in the pipe before it is introduced into the column main body 2.

Hereinafter, operation of the apparatus 1 for producing a PVA resin will be described. In the apparatus 1 for producing a PVA resin of the present embodiment, reflux liquid and liquid methanol are first added to the polymerization solution discharged from the polymerization tank (not shown in the Figure) for regulation of the concentration into a particular range. The polymerization solution after concentration adjustment is introduced through the polymerization solution inlet into the column main body 2 and methanol vapor is fed through the methanol inlet.

In such an apparatus, the polymer moves downward in the column main body 2, while the methanol vapor upward in the column main body 2, leading to contact between the polymerization solution and the methanol vapor in counter-current flow and thus to gasification of the monomers contained in the polymerization solution with methanol. The unreacted monomers contained in the polymerization solution are thus discharged from the top of the column as a mixture with methanol. On the other hand, the monomer-free polymerization solution (polymer solution) is discharged from the bottom of the column and sent to the saponification step described below.

Part of the monomer/methanol mixture discharged from the top of the column is injected as reflux liquid into the pipe in which the polymerization solution is flowing and introduced into the column main body 2 with the polymerization solution. The other mixture is reused partially in the polymerization step and the unused mixture is separated into monomers and methanol, which are sent respectively for solvent recovery systems.

Because the reflux liquid and additionally liquid methanol are added to the polymerization solution, the circulation amount of unreacted monomers decreases, permitting efficient removal of unreacted monomers from the polymerization solution with energy smaller than that by traditional methods in the apparatus for producing a PVA resin in the present embodiment.

### (Third embodiment)

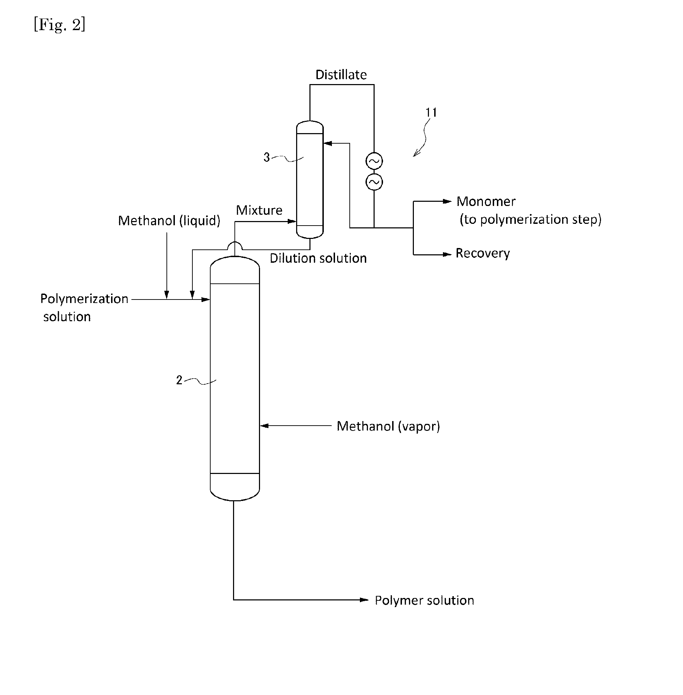

Hereinafter, the apparatus for producing a PVA resin in the third embodiment of the present invention will be described. Fig. 2 is a schematic view illustrating the configuration of the PVA resin-producing apparatus in the present embodiment. As shown in Fig. 2, the apparatus 11 for producing a PVA resin in the present embodiment has, in addition to column main body 2, a concentration unit 3 for concentration of the methanol/monomer mixture discharged from the column main body 2 to its azeotropic composition. The configuration of the concentration unit 3 is not particularly limited, but a configuration in which a column main body has valve trays, in multiple stages, each having multiple gas blowout ports is preferable.

In the apparatus 11 for producing a PVA resin, the monomer/methanol mixture discharged from the column main body 2 is introduced into the lower region of the concentration unit 3, where it is concentrated to its azeotropic composition. In this way, a distillate higher in monomer concentration is obtained from the top of the concentration unit 3 and the distillate is partially introduced once again as reflux liquid into the top region of the concentration unit 3. The other distillate is partially reused in the polymerization step and the unused distillate is separated into monomers and methanol and fed into their respective solvent recovery systems.

On the other hand, a methanol solution lower in monomer concentration is withdrawn from the bottom of the concentration unit 3 and injected as dilution solution into the pipe in which the polymerization solution is flowing. In this way, it is possible to recover the monomers efficiently by installing a concentration unit 3 and concentrating the mixture discharged from the top of the column main body 2 to its azeotropic composition therein. As a result, it is possible to separate and recover unreacted monomers from polymerization solution efficiently with energy smaller than that in conventional production apparatuses.

The configurations and advantageous effects other than those described above of the apparatus 11 for producing a PVA resin in the present embodiment are the same as those of the production apparatus 1 in the second embodiment described above.

### Examples

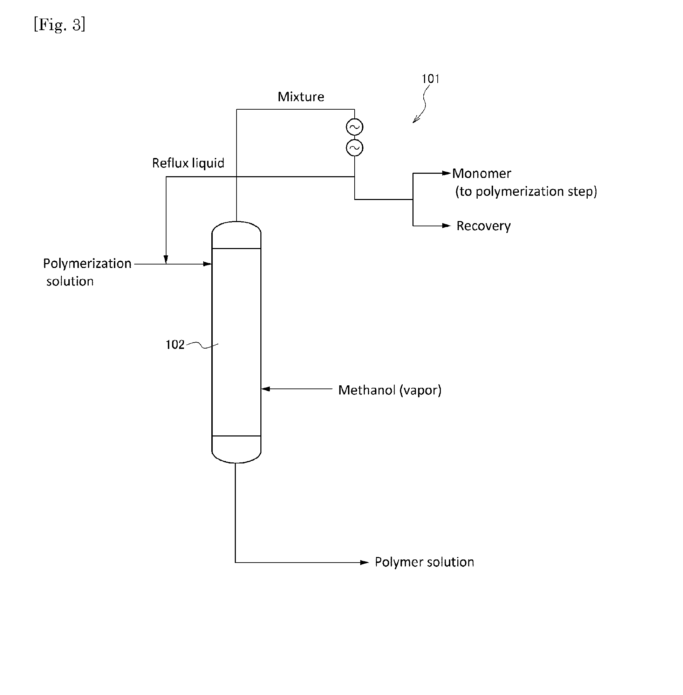

Hereinafter, the advantageous effects of the present invention will be described more specifically with reference to Examples and Comparative Examples of the present invention. In the present Example, unreacted monomers were separated from polymerization solution by using the production apparatus in the third embodiment shown in Fig. 2 (Example) and the conventional production apparatus shown in Fig. 3 (Comparative Example) and the energy efficiencies were compared.

Specifically, a polymerization solution containing vinyl acetate at a concentration of 29 mass % and a polymer at a concentration of 54 mass % was introduced from a polymerization tank into a column main body 2, 102, at a flow rate of 3.4 t/hr. Then in the Example where the production apparatus 11 shown in Fig. 2 was used, liquid methanol was injected into the polymerization solution at a flow rate of 1.0 t/hr before the mixture is introduced into column main body 2. On the other hand, in the Comparative Example where the production apparatus 101 shown in Fig. 3 was used, the reflux liquid was injected to the polymerization solution at a flow rate of 3.3 t/hr before introduction of the mixture into column main body 2.

As a result, in the production apparatus of Comparative Example, when the amount of injected methanol is 3.4 t/hr and the flow rate of recovered polymer solution is 5.2 t/hr, the polymer concentration was 36 mass % and the residual vinyl acetate content was less than 1500 ppm. In addition, the concentration of vinyl acetate in the distillate was 58.6 mass % and the total amount (flow rate) of the distillate reused in the polymerization step and the liquid sent to the recovery systems was 1.6 t/hr.

In contrast in the production apparatus of the Example of the present invention, when the amount of methanol injected was 2.4 t/hr and the flow rate of the recovered polymer solution was 5.2 t/hr, the polymer concentration was 36 mass % and the residual vinyl acetate content was less than 1500 ppm. In addition, the concentration of vinyl acetate in the distillate was 58.9 mass %; the total amount (flow rate) of the distillate reused in the polymerization step and the liquid sent to the recovery systems was 1.6 t/hr; and the amount of the reflux liquid fed back to the concentration unit was 1.5 t/hr.

The results above show that it is possible to reduce the amount of methanol vapor injected, thereby reducing the energy needed for generation of the methanol vapor, and removing monomers efficiently by using the PVA resin-producing apparatus according to the present invention.

### Reference Signs List

- 1, 11, 101:: PVA resin-producing apparatus
- 2:: Column main body
- 3:: Concentration unit

## Claims

1. A method for producing a polyvinyl alcohol, at least comprising:
a polymerization step of polymerizing one or more vinyl esters or copolymerizing a vinyl ester with other monomers copolymerizable therewith;
a monomer-removing step of bringing the polymerization solution obtained in the polymerization step into contact with methanol vapor for removal of unreacted monomers; and
a saponification step of saponifying the unreacted monomer-free polymer solution in an organic solvent in the presence of an alkali catalyst, wherein
the concentration of the polymerization solution is adjusted by addition of liquid methanol before contact with methanol vapor in the monomer-removing step.

2. The method for producing a polyvinyl alcohol according to Claim 1, further comprising a step of concentrating the monomer/methanol mixture generated by contact between the polymerization solution and methanol vapor to its azeotropic composition.

3. The method for producing a polyvinyl alcohol according to Claim 2, wherein the monomers are recovered from the solution after concentration.

4. An apparatus for producing a polyvinyl alcohol, comprising:
a column main body;
a methanol-introducing pipe for supply of methanol to a polymerization solution;
a polymerization solution-introducing mechanism for supply of the polymerization solution into the top region of the column main body, the mechanism having the methanol-introducing pipe; and
a methanol vapor-introducing mechanism for supply of methanol vapor into the bottom region of the column main body, wherein
the methanol-diluted polymerization solution is introduced into the column main body.

5. The apparatus for producing a polyvinyl alcohol according to Claim 4, wherein the polymerization solution and the methanol vapor are brought into contact with each other in counter-current flow in the column main body.

6. The apparatus for producing a polyvinyl alcohol according to Claim 4 or 5, further comprising a concentration unit of concentrating a distillate discharged from the top of the column main body.
